# DEMANDE DE BREVET EUROPEEN

(11) **EP 0 587 007 A1**
(43) Date de publication de la demande: **16.03.1994**
(21) Numéro de dépôt: 93113833.3
(22) Date de dépôt: 30.08.1993
(51) Int. Cl.: B29C 67/18, E04G 13/02

(54) **Elément de déchirement d'un coffrage, coffrage et appareil pour la réalisation dudit élément de déchirement**

(30) Priorité: 07.09.1992 CH 2790/92
(71) Demandeur: de Kalbermatten, Roger, CH-1234 Vessy (CH)
(72) Inventeur: de Kalbermatten, Roger, CH-1234 Vessy (CH)

(57) **Abrégé**

L'élément de déchirement comprend un ruban adhésif (3), par exemple de papier, le long de l'axe longitudinal (4) duquel est collé un fil d'acier (2). Un deuxième ruban de papier (5), de largeur inférieure à celle du ruban (3), est également collé sur ce dernier et recouvre le fil (2). Grâce aux parties débordantes de la couche autoadhésive dont est muni le ruban (3), l'ensemble (1) formé par celui-ci, le fil (2) et le ruban (5), peut être collé sur la face interne d'un coffrage de carton servant à la réalisation d'ouvrages en béton, notamment de piliers.

## Description

La présente invention a pour objet un élément de déchirement d'un coffrage fait en une matière apte à être déchirée, notamment en carton, et servant à la réalisation d'ouvrages moulés, en particulier en béton.

L'invention a également pour objet un coffrage ainsi qu'un appareil pour la réalisation de l'élément de déchirement.

Il est connu d'utiliser, pour la réalisation d'ouvrages tels que des piliers, en matière moulable, en particulier en béton, des coffrages faits en un matériau, par exemple du carton, permettant le déchirement du coffrage après la prise de la matière moulée, ce qui facilite le décoffrage.

Différents moyens ont été mis en oeuvre jusqu'à présent pour réaliser le déchirement du coffrage. En particulier, on a tendu à l'intérieur du coffrage, contre la face interne de sa paroi, un fil d'acier sur une extrémité duquel on exerce une traction afin de produire le déchirement.

Cette solution présente l'inconvénient que le fil d'acier doit être maintenu tendu à l'intérieur du coffrage afin de rester bien appliqué contre la paroi de celui-ci. En effet, l'expérience montre que si des espaces libres, même peu importants, subsistent entre le fil et la paroi du coffrage, le béton s'y insinue de sorte que l'arrachage du fil aux fins de déchirer le cofrage devient impossible. Or, même avec un fil bien tendu, ce risque ne peut pas être exclu. C'est la raison pour laquelle, alors que le fil constitue le moyen le plus efficace et le plus simple pour déchirer un coffrage, d'autres moyens, qui ne présentent pas l'inconvénient susmentionné, ont été proposés, tels que l'emploi de bandes en matière plastique ou autres, moyens qui ne donnent malheureusement pas entière satisfaction.

Le but de la présente invention est de permettre l'emploi d'un fil pour assurer le déchirement d'un coffrage tout en éliminant totalement le risque que le matériau moulé ne vienne s'insinuer entre le fil et le coffrage.

Ce but est atteint grâce aux moyens définis dans les revendications 1, 5 et 6.

Le dessin représente, à titre d'exemple, une forme d'exécution de l'objet de l'invention.
La fig. 1 est une vue en perspective d'un tronçon d'un élément de déchirement pour coffrage.
La fig. 2 est une vue en perspective d'un tronçon d'un élément de coffrage tubulaire, et
La fig. 3 est une vue en perspective, à plus petite échelle, d'un appareil pour la réalisation de l'élément de déchirement de la fig. 1.

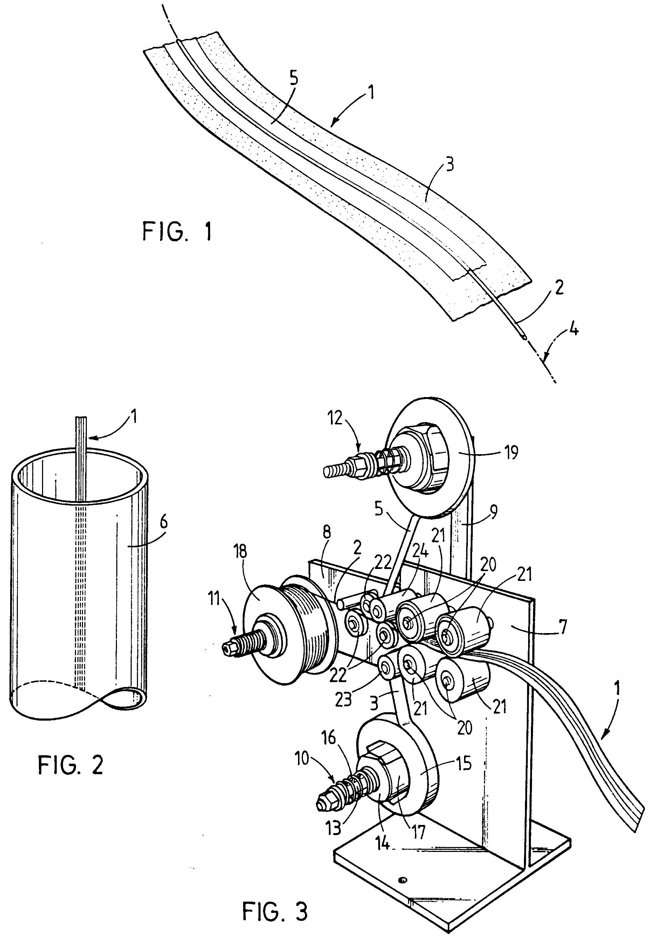

L'élément de déchirement représenté à la fig. 1, désigné d'une façon générale par 1, comprend un fil d'acier 2 collé sur un ruban autoadhésif 3, en papier. Le fil 2 s'étend le long de l'axe longitudinal, désigné par 4, du ruban 3. Il est recouvert d'un second ruban autoadhésif de papier, désigné par 5, collé sur le premier, dont la largeur est inférieure à celle du ruban 3, de sorte que ce dernier déborde de part et d'autre de ce deuxième ruban. Ce deuxième ruban, qui est facultatif, n'aura pas, nécessairement, à être lui aussi autoadhésif.

La face du ruban 3 visible au dessin, sur laquelle sont collés le fil 2 et le ruban 5, étant sa face adhésive, l'élément de déchirement 1 peut être aisément collé sur la face interne d'un coffrage, en veillant à ce qu'il dépasse à au moins une des extrémités de celui-ci pour permettre de le saisir, comme représenté à la fig. 2.

Dans cette figure, un élément tubulaire de coffrage, désigné par 6 destiné au moulage d'un corps cylindrique, par exemple en béton, porte, collé sur sa face interne, un tel élément de déchirement 1.

Lorsque la prise de l'ouvrage est effectuée, il suffit de saisir l'extrémité dépassante de l'élément de déchirement 1 et d'exercer une traction sur celui-ci pour produire le déchirement du coffrage.

Du fait que l'élément de déchirement est collé contre la paroi du coffrage, il n'y a pas de risque que le béton vienne s'insinuer entre le fil et le coffrage, empêchant le déchirement ultérieur. De plus, il n'y a pas de précaution particulière à prendre pour tendre le fil sur la face du coffrage : il suffit de dérouler l'élément de déchirement, livré en rouleau, à l'intérieur du coffrage et de le coller au fur et à mesure de son déroulement.

L'appareil permettant la réalisation de l'élément de déchirement 1, représenté à la fig. 3, comprend un bâti comportant une plaque verticale 7 portant un bras horizontal 8 et un bras vertical 9.

La plaque 7 et les bras 8 et 9 portent chacun, respectivement, un dispositif support pour un rouleau de papier ou pour une bobine, désigné d'une façon générale par 10, 11 et 12 respectivement. Ces trois supports de déroulement fonctionnant sur un principe identique, seul le dispositif 10 sera décrit ici en détail. Ce dispositif comprend un tourillon fixe 13 sur lequel est engagé un noyau 14 destiné à recevoir un rouleau 15 du ruban de papier autoadhésif 3. Un ressort à boudin 16 engagé sur le tourillon 13 prend appui d'une part sur ce dernier par l'intermédiaire d'un écrou vissé sur l'extrémité du tourillon et d'autre part sur le noyau 14 pour exercer sur celui-ci une friction empêchant le noyau, et par conséquent le rouleau 15, de tourner trop librement. Il est à remarquer qu'une lame flexible 17 est interposée entre le noyau 14 et le rouleau 15 de façon à les solidariser angulairement.

Le dispositif de déroulement 11 est destiné à recevoir une bobine 18 sur laquelle est enroulé le fil 2 alors que le dispositif de déroulement 12 est destiné à recevoir un rouleau 19 du ruban de papier autoadhésif 5.

La plaque verticale 7 du bâti porte deux paires de tourillons fixes 20 sur chacun desquels est monté rotativement un galet 21, en matière souple et élastiquement compressible, par exemple en caoutchouc.

L'appareil décrit et représenté s'utilise en engageant simultanément le ruban 3, le fil d'acier 2 et le ruban 5 entre les deux paires de galets 21, ce qui est possible quand bien même les galets de chaque paire sont en contact l'un avec l'autre en raison de l'élasticité de la matière dont ils sont faits, et en tirant sur ces trois éléments, ruban 3, fil 2 et ruban 5, de telle sorte qu'ils se déroulent et se collent les uns aux autres de manière à former l'ensemble de déchirement 1 tel que représenté à la fig. 1.

Afin que le fil 2 se présente bien au milieu du ruban 3, et de plus qu'il soit redressé, c'est-à-dire que soit supprimée la courbure que son stockage en bobine lui aura conférée, le fil 2 passe, avant de pénétrer entre les galets 21 de la première paire, entre trois galets 22 montés rotativement sur le bras 8 du bâti et qui présentent chacun une gorge dans laquelle s'engage le fil. De même les rubans 2 et 5 passent, avant de s'engager dans la première paire de galets 21 sur des rouleaux de guidage 23, respectivement 24.

Il est à remarquer que, si le fil de déchirement est, de préférence, en acier, par exemple en acier recuit pour permettre de le redresser aisément, il pourra également être en une autre matière, par exemple en la matière connue dans le commerce sous le nom de "NYLON" (marque déposée).

De même, les rubans 3 et 5 pourront ne pas être en papier, mais en matière plastique, par exemple.

Enfin, le matériau dont sera fait le coffrage ne sera pas obligatoirement du carton mais pourra également être une autre matière pour autant que celle-ci soit apte à être déchirée.

## Revendications

1. Elément de déchirement d'un coffrage fait en une matière apte à être déchirée, notamment en carton, et servant à la réalisation d'ouvrages moulés, en particulier en béton, caractérisé par le fait qu'il comprend un fil collé sur un ruban adhésif, s'étendant longitudinalement sur celui-ci, l'ensemble ainsi formé étant destiné à être collé sur la face interne du coffrage.

2. Elément de déchirement suivant la revendication 1 caractérisé par le fait que ledit fil est recouvert par un second ruban, également collé sur ledit ruban adhésif, la largeur de ce second ruban étant inférieure à celle du ruban adhésif de telle manière que la couche adhésive de ce dernier déborde de part et d'autre du second ruban ce qui permet de coller l'ensemble sur la face interne du coffrage.

3. Elément de déchirement suivant la revendication 2, caractérisé par le fait que ledit second ruban est également adhésif.

4. Elément de déchirement suivant la revendication 1, caractérisé par le fait que ledit fil est en acier.

5. Coffrage fait en une matière apte à être déchirée, servant à la réalisation d'un ouvrage moulé, en particulier en béton, caractérisé par le fait qu'il est muni, collé sur sa face interne, de l'élément de déchirement suivant la revendication 1.

6. Appareil pour la réalisation de l'élément de déchirement suivant la revendication 1, caractérisé par le fait qu'il comprend un support pour une bobine sur la-quelle est enroulé un fil, un support pour un rouleau de ruban adhésif et au moins une paire de galets parallèles, agencés de façon que le fil et le ruban adhésif puissent passer sans jeu appréciable, entre eux le tout de manière qu'en tirant simultanément le fil et le ruban après que ceux-ci ont passé entre lesdits galets, on amène le fil et le ruban à se dérouler, le fil se collant sur le ruban lors du passage entre les galets.

7. Appareil suivant la revendication 6, caractérisé par le fait qu'il comprend un troisième support, destiné à recevoir un rouleau d'un deuxième ruban, de largeur inférieure à celle du premier ruban, qui se colle sur ce dernier en même temps que le fil lors du passage entre ladite paire de galets.

8. Appareil suivant la revendication 6, caractérisé par le fait que lesdits galets sont revêtus d'une matière souple et élastiquement compressible et sont en contact l'un avec l'autre, l'elasticité de ladite matière permettant néanmoins le passage, entre lesdits galets, du fil et du ruban adhésif.

9. Appareil suivant la revendication 6, caractérisé par le fait qu'il comprend deux paires de galets entre chacune desquelles passe, successivement, le fil et le ruban adhésif.

10. Appareil suivant la revendication 6, caractérisé par le fait qu'il comprend un jeu de galets entre lesquels passe le fil avant de se présenter entre ladite paire de galets et qui sont destinés d'une part à guider le fil de manière qu'il se trouve situé en regard de l'axe longitudinal du ruban lorsqu'il entre en contact avec celui-ci et d'autre part à redresser le fil de façon qu'il ne conserve pas la courbure que lui aura conférée son stockage en bobine.
